# EUROPEAN PATENT APPLICATION

(11) **EP 2 386 662 A1**
(43) Veröffentlichungstag der Anmeldung: **16.11.2011**
(21) Anmeldenummer: 09837695.7
(22) Anmeldetag: 08.09.2009
(51) Int. Cl.: C22B 11/00, C22B 3/10, C22B 3/24

(54) **VERFAHREN ZUR SORPTIVEN EXTRAKTION VON EDELMETALLEN**

(30) Priorität: 11.01.2009 RU 2009100432
(71) Anmelder: Zakrytoe Akcionernoe Obshestvo "Uralkaliy Technologiya", Permsky Krai 618426 (RU)
(72) Erfinder: LOGVINENKO, Izabella Alekseevna, Moscow 115409 (RU); VLASOVA, Tatyana Veniaminovna, Moscow 113447 (RU); SINEGRIBOV, Viktor Andreevich, Moscow 125413 (RU); SMETANNIKOV, Andrei Filippovich, Perm 614061 (RU); KRASNOSHTEIN, Arkadiy Evgenievich, Perm 614039 (RU)
(74) Vertreter: Jeck, Anton
(86) Internationale Anmeldenummer: PCT/RU2009/000457
(87) Internationale Veröffentlichungsnummer: WO 2010/080050

(57) **Zusammenfassung**

Die Erfindung betrifft ein Verfahren zur Sorptionsausbringung von Edelmetallen aus Mineralrohstoffen, die Chloride von Alkali- und Erdalkalimetallen aufweisen. Dabei ist vorgesehen, dass die Sorption der Edelmetalle aus der Trübe unter Einsatz von einem synthetischen stark- und schwachbasische Funktionsgruppen enthaltenden Sorbens und mit einer nachfolgenden Desorption durchgeführt wird, wobei ein Abwaschen des Sorbens in zwei Schritten durchgeführt wird und zwar in einem ersten Schritt mittels der flüssigen Phase der Abtrübe und in einem zweiten Schritt mittels Wassers, dass die Desorption der Edelmetalle mittels einer Salzsäurelösung von Thioharnstoff durchgeführt wird und dass die eigentliche Ausscheidung der Edelmetalle aus der Thioharnstoff-Lösung in ein Sammelkonzentrat unter Wirkung einer Lösung von Ammoniumhydroxid vorgenommen wird, dann wird die Edelmetallausbringung erhöht, die Reaktionszeit des Sorbens wesentlich gesteigert und der Verbrauch an chemischen Reagenzien verringert.

## Beschreibung

Die Erfindung betrifft ein Verfahren zur Sorptionsausbringung von Edelmetallen nach dem Oberbegriff des Anspruchs 1.

Die Erfindung ist in der Hydrometallurgie anwendbar und kann zur Ausbringung von Edel-metallen (Palladium, Platin, Gold, Silber) aus verschiedenen Arten von Mineralrohstoffen eingesetzt werden.

Ein bekanntes Verfahren zur Sorptionsausbringung von Palladium aus Chloridlösungen unter großen Mengen von Kupfer (über 100 g/dm³) (Buntmetalle, 2004, Heft 3, S. 30 - 33) umfasst eine Sorption von Palladium durch einen Anionenaustauscher Rossion-5 und eine Desorption von Palladium mittels konzentrierter Salzsäure.

Die Mängel des Verfahrens sind eine zu komplizierte Ausscheidung von Palladium aus konzentrierter Salzsäure und ein zu großer Verbrauch von Reagenzien.

Es ist en anderes hydrometallurgisches Verfahren zur Ausbringung von Platinmetallen aus Erzen, Konzentraten und Zwischenprodukten bekannt (Khimicheskaya tekhnologiya / Chemische Technologie, 2003, Heft 12, S. 34 - 38, 48). Das Verfahren umfasst ein oxydierendes Rösten, eine Chlorauslaugung des Erzmaterials unter harten Bedingungen (mit einer hohen Konzentration des Auslaugungsreagens), eine Ausbringung der Platinmetalle in Salzsäurelösungen von 98 - 99 %, ihre Sorption durch einen starkbasischen Anionenaustauscher und die Verbrennung in einem gesättigten Anionenaustauscher.

Die Nachteile dieses Verfahrens umfassen die Durchführung der Sorption aus den Lösungen (d. h. der Verfahrensablauf schließt eine Filterung der sauren Lösungen mit einem äußerst niedrigen Filtrationskoeffizienten ein) und einen hohen Aufwand für den Anionenaustauscher, welcher während der Herstellung von einem Konzentrat der Platinmetalle verbrannt wird.

Aus dem Urheberschein RU (UdSSR) 1790619 (IPC C22 B/08, veröffentlicht am 23.01.93, Patentblatt Nr. 3) ist ein Verfahren zur Ausbringung von Gold aus Erzen mittels Sorption bekannt. Das Verfahren umfasst die Ausbringung von Gold aus Erz mittels Zyanlaugerei und mittels Sorption durch einen porösen Anionenaustauscher AM-2B mit stark- und schwachbasischen Funktionsgruppen. Die Desorption von Gold erfolgt mittels der angesäuerten Lösung von Thioharnstoff.

Dieses Verfahren ergibt positive Resultate im Zusammenhang mit der Ausbringung von Edelmetallen aus Erztrüben mittels Zyanlaugerei.

Jedoch weist dieses Verfahren folgende Nachteile auf:
- einen hohe Verbrauch von Reagenzien für den Regenerationsvorgang des gesättigten Anionenaustauschers aus zyanidhaltigen Medien;
- die Mehrstufigkeit und eine lange Dauer (200 - 300 Stunden) der Regeneration im Anionenaustauscher. Das liegt daran, dass die Funktion des Anionenaustauschers zuerst aus der Basen-Zyanid-Form in die Chlorid-Thioharnstoff-Form und danach wieder in die Basen-Zyanid-Form umgesetzt werden muss.

Es ist Aufgabe der Erfindung, eine Sammelausbringung von Edelmetallen aus Salzsäuretrüben mit hohen Werten und eine Reduzierung der Regenerationszeit des Sorbens um das 12- bis 13-fache bei einer Verringerung des Verbrauchs an chemischen Reagenzien zu erreichen.

Die gestellte Aufgabe wird durch die Merkmale des Anspruchs 1 gelöst.

Das Verfahren zur Sorptionsausbringung von Edelmetallen aus Mineralrohstoffen, die Chloride von Alkali- und Erdalkalimetallen aufweisen, umfasst eine Sorption der Edelmetalle aus der Trübe unter Einsatz von einem synthetischen Sorbens und eine nachfolgende Desorption, das Abwaschen des Sorbens. Es wird in 2 Schritten durchgeführt. Im ersten Schritt erfolgt das Abwaschen des Sorbens mit einer flüssigen Phase der Abtrübe. Im zweiten Schritt wird für ein Abwaschen Wasser verwendet. Die Desorption der Edelmetalle wird mit Hilfe einer Salzsäurelösung eines Thioharnstoffs durchgeführt. Danach erfolgt die Ausscheidung von Edelmetallen mittels einer Lösung von Ammoniumhydroxid aus der Thioharnstoff-Lösung in das Sammelkonzentrat. Dabei wird die Desorption der Edelmetalle bei einer Temperatur von 50 - 60 °C mittels einer Lösung durchgeführt, die 60 - 80 g/dm³ Thioharnstoff und 3 - 10 g/dm³ Salzsäure enthält. Die Ausscheidung der Edelmetalle erfolgt mittels der Lösung von Ammoniumhydroxid bei einem pH-Wert von 8,7 - 8,8 und einer Temperatur von 50 - 60 °C. Der ganze Vorgang wird unter Einsatz von Sorbens durchgeführt, welches stark- und schwachbasische Funktionsgruppen enthält.

Diese Merkmale ermöglichen die Regeneration des handelsüblichen Anionenaustauschers (z. B. AM-2B) in Kombination mit dem nachfolgenden verfahrenstechnisch einfachen und wirksamen Verfahren zur Herstellung des Sammelkonzentrats der Edelmetalle aus dem handelsüblichen Regenerat.

Das Verfahren wird in folgender Weise ausgeführt:
Das Konzentrat wird aus Ton- und Salzabfällen von Kaliwerken ausgeschieden.
Nach dem Rösten des Konzentrats wird der Abbrand mittels der verdünnten Salzsäurelösung (100 g/dm³) ausgelaugt. Infolge des Auslaugungsvorgangs wird die Trübe erzeugt, die 60 - 70 g/dm³ HCl und 5 - 22 g/dm³ FeCl₃ enthält. Aus dieser Trübe werden die Edelmetalle in der Stufenanordnung der Geräte mit siebförmigen Ablässen sorbiert. Es wurde der im industriellen Umfang zur Goldsorption eingesetzte Anionenaustauscher AM-2B (Adsorptionsmittel) benutzt, welcher 17 % der quartären und 83 % der tertiären Aminogruppen enthält.

Die Sorption wird unter folgenden Bedingungen durchgeführt: Die Trübenmenge betrug ca. 100 dm³ pro Gerät. Die Beschickung des Sorbens betrug 0,5 dm³, die Sorptionsdauer 1,5 - 2 Stunden pro jede der 6 Stufen. Danach folgt die Stufe des Abwaschens des Sorbens. Beim Abwaschen mit Wasser ist eine teilweise Desorption von Edelmetallen aus dem Sorbens möglich. Folglich sind auch die Verluste von Edelmetallen mit Schwemmwasser möglich. Um die eventuelle Desorption von Edelmetallen aus dem gesättigten Sorbens während des direkten Abwaschens mit Wasser nach Abschluss der Sorption auszuschließen, wurden folgende Maßnahmen ergriffen. Die Schlämme wurden vom gesättigten Sorbens mittels Abwaschens entfernt. Zum Abwaschen wurden die flüssige Phase der Abtrübe und dann Wasser verwendet. Danach wurde das Sorbens im Laufe von 15 - 24 Stunden mit einer Salzsäurelösung von Thioharnstoff regeneriert. Das Sammelkonzentrat der Edelmetalle wurde aus dem handelsüblichen Regenerat im Laufe von 2 - x Stunden ausgeschieden.

### Beispiel 1

Es wurden Versuche durchgeführt, um den Einfluss des Abwaschens mit Wasser auf die Anteilswerte der Edelmetalle im Sammelkonzentrat zu ermitteln (Tabelle 1).

**Tabelle 1**

| Einfluss des Abwaschens des gesättigten Anionenaustauschers mit Wasser auf die Anteile der Edelmetalle im Sammelkonzentrat nach dem Abwaschen mittels der flüssigen Phase der Abtrübe. | | | | | | | | |
|---|---|---|---|---|---|---|---|---|
| Pos. | Wasserverbrauch, dm³/dm³ | Anteile im Konzentrat, g/t | | | | | Ausbringung ins Schwemmwasser, % | |
| | | Pd | Au | Pt | Ag | Σ | Fe | Al |
| 1 | 0 | 216 | 8,3 | 4,2 | 29,5 | 258 | - | - |
| | 3,0 | 3740 | 96,5 | 50,0 | 413 | 4300 | 80,1 | 80,0 |
| | 6,0 | 3800 | 103 | 53,0 | 420 | 4370 | 94,1 | 82,0 |
| 2 | 0 | 421 | 15,1 | 5,0 | 271 | 712 | - | - |
| | 21 | 16300 | 800 | 127 | 5200 | 22400 | 85,0 | 93,0 |
| 3 | 0 | 373 | 86,0 | 44 | 441 | 944 | - | - |
| | 3,0 | 1370 | 175 | 141 | 147 | 1830 | 91,3 | 91,0 |

Aus den Angaben der Tabelle 1 ist Folgendes ersichtlich: Das Abwaschen des gesättigten Sorbens mit Wasser als die zweite Stufe, d. h. nach dem Abwaschen mit der flüssigen Phase der Abtrübe, ermöglicht es, über 80 % von Eisen und Aluminium (im Durchschnitt für 10 Versuche - 84 % Eisen) zu entfernen. Dadurch nimmt der Gehalt an Edelmetallen im Sammelkonzentrat akut zu.

### Beispiel 2

Es wurden Versuche zur Ermittlung des Zusammenhangs zwischen der Konzentration der Thioharnstoffe und der Ausbringung von Edelmetallen im Desorbat durchgeführt (Tabelle 2).

**Tabelle 2**

| Zusammenhang zwischen der Konzentration der Thioharnstoffe und der Ausbringung von Edelmetallen im Desorbat | | | |
|---|---|---|---|
| | Temperatur - 40°C | | |
| Konzentration, g/dm³ | Ausbringung, % | | |
| | Pd | Au | Pt |
| 80 | 92 | 100 | 70 |
| 60 | 84 | 98 | 65 |
| 30 | 79 | 93 | - |
| 8 | 43 | - | 60 |

Die Überprüfung zeigt, dass die Desorption von Palladium von der Thioharnstoffkonzentration im Desorbat sehr abhängig ist. (Tabelle 2).

### Beispiel 3

Es wurden Versuche durchgeführt, um den Einfluss der Temperatur auf die Intensität von der Desorption der Edelmetalle einzuschätzen (Tabelle 3).

**Tabelle 3**

| Einfluss der Desorptionstemperatur auf die Ausbringung der Edelmetalle. Thioharnstoffkonzentration - 80 g/dm³ | | | |
|---|---|---|---|
| Temperatur, °C | Desorptionsgrad, 5, bei * Verbrauch der Lösung von 10 Vol./Vol. Anionenaustauscher | | |
| | Pd | Au | Pt |
| 20 | 80 | - | - |
| 40 | 92 | 100 | 70 |
| 50 | 100 | - | - |
| 60 | 100 | - | - |

| | | | |
|---|---|---|---|
| * Zehn (10) Anteile (Vol.) der Lösung pro einen (1) Anteil (Vol.) des Anionenaustauschers. | | | |

Aus den Daten der Tabelle ergibt sich, dass der optimale Temperaturbereich für die Ausbringung von Palladium 50 - 60 °C beträgt. Für die Ausbringung von Gold und Platin sind 40 °C optimal, wobei die Palladiumausbeute ein wenig verringert wird.

### Beispiel 4

Es wurden Versuche durchgeführt, um den Einfluss des pH-Werts auf den Ausscheidungsvorgang von Palladium, Gold und Platin einzuschätzen. Dabei wurde als Abscheidungsmittel Ammoniumhydroxid (Tabelle 4) verwendet.

**Tabelle 4**

| Einfluss des pH-Werts auf die Ausscheidung von Edelmetallen durch Ammonium-hydroxid | | | | |
|---|---|---|---|---|
| pH | Ausbringung ins Sammelkonzentrat, % | | | |
| | Pd | Au | Pt | Ag |
| 6,0 | 57,9 | nicht ermittelt | nicht ermittelt | 14,4 |
| 7,6 | 75,1 | nicht ermittelt | nicht ermittelt | 37,2 |
| 8,6 | 98,9 | 99,5 | 91,2 | 58,1 |
| 8,7 | 99,6 | nicht ermittelt | nicht ermittelt | 88,8 |
| 8,7 | 99,6 | 99,3 | 99,0 | 88,8 |
| 8,7 | 99,3 | 97,1 | 94,2 | 7,5 |
| 8,7 | 96,4 | 91,6 | nicht ermittelt | 39,0 |
| 8,8 | 98,8 | 99,7 | 71,3 | 28,3 |
| 8,9 | 96,8 | 100 | 53,5 | 81,9 |
| 9,1 | 95,9 | 98,8 | 63,8 | nicht ermittelt |
| 9,4 | 88,0 | nicht ermittelt | nicht ermittelt | nicht ermittelt |

Aus dieser Tabelle geht hervor, dass für die Ausscheidung von Palladium, Gold und Platin der pH-Wert von 8,7 - 8,9 optimal ist.

Der technische Nutzeffekt des vorgeschlagenen Verfahrens zur Ausbringung der Edelmetalle aus Mineralrohstoffen, die Chloride von Alkali- und Erdalkalimetallen enthalten, besteht darin, dass seine Anwendung:
- eine umfassende Ausbringung von Edelmetallen aus den Salzsäuretrüben mit hohen Werten sicherstellt;
- eine Verkürzung der Regenerationszeit des Sorbens um das 12- bis 13-fache gegenüber den bekannten Lösungen ermöglicht;
- den Verbrauch von chemischen Reagenzien verringert;
- günstige Bedingungen für die nachfolgende Verarbeitung der Sammelkonzentrate bis zu den einzelnen Metallen (ihrer Salze) schafft.

## Patentansprüche

1. Verfahren zur Sorptionsausbringung von Edelmetallen aus Mineralrohstoffen, die Chloride von Alkali- und Erdalkalimetallen aufweisen,
**dadurch gekennzeichnet,**
**dass** die Sorption der Edelmetalle aus der Trübe unter Einsatz von einem synthetischen stark- und schwachbasische Funktionsgruppen enthaltenden Sorbens und mit einer nachfolgenden Desorption durchgeführt wird, wobei ein Abwaschen des Sorbens in zwei Schritten durchgeführt wird und zwar in einem ersten Schritt mittels der flüssigen Phase der Abtrübe und in einem zweiten Schritt mittels Wassers,
**dass** die Desorption der Edelmetalle mittels einer Salzsäurelösung von Thioharnstoff durchgeführt wird und
**dass** die eigentliche Ausscheidung der Edelmetalle aus der Thioharnstoff-Lösung in ein Sammelkonzentrat unter Wirkung einer Lösung von Ammoniumhydroxid vorgenommen wird.

2. Verfahren nach Anspruch 1,
**dadurch gekennzeichnet,**
**dass** der Vorgang in einer Stufenanordnung von 6 Einrichtungen mit siebförmigen Ablässen durchgeführt wird, wobei die Beschickungsmenge des Sorbens in jeder Einrichtung festgelegt ist.

3. Verfahren nach Anspruch 1,
**dadurch gekennzeichnet,**
**dass** die Desorption von Edelmetallen bei einer Temperatur von 50 - 60 °C mittels einer Lösung vorgenommen wird, die 60 - 80 g/dm³ Thioharnstoff und 3 - 10 g/dm³ Salzsäure aufweist.

4. Verfahren nach Anspruch 1,
**dadurch gekennzeichnet,**
**dass** die Ausscheidung der Edelmetalle mittels einer Lösung von Ammoniumhydroxid mit einem pH-Wert von 8,7 - 8,8 und einer Temperatur von 50 - 60 °C vorgenommen wird.
